# FASCICULE DE BREVET EUROPEEN

(11) **EP 1 931 217 B1**
(45) Date de publication et mention de la délivrance du brevet: **07.08.2013**
(21) Numéro de dépôt: 06792755.8
(22) Date de dépôt: 09.08.2006
(51) Int. Cl.: A23K 1/175, C01B 25/00

(54) **ADDITIF MINERAL POUR COMPOSITION ALIMENTAIRE POUR ANIMAUX ET SON PROCEDE DE PREPARATION**
MINERALZUSATZ FÜR EINE NAHRUNGSZUSAMMENSETZUNG FÜR TIERE UND VERFAHREN ZUR HERSTELLUNG DAVON
MINERAL ADDITIVE FOR A DIETARY COMPOSITION FOR ANIMALS AND METHOD FOR THE PRODUCTION THEREOF

(30) Priorité: 10.08.2005 BE 200500390
(43) Date de publication de la demande: 18.06.2008
(73) Titulaire: Ecophos, 1348 Louvain-la-Neuve (BE)
(72) Inventeur: TAKHIM, Mohamed, B-1348 Louvain-la-neuve (BE)
(74) Mandataire: Pecher, Nicolas
(86) Numéro de dépôt international: PCT/EP2006/065179
(87) Numéro de publication internationale: WO 2007/017517

(56) Documents cités:
- WO-A-02/12120
- WO-A-2005/066071
- FR-A1- 2 273 760
- US-A- 4 154 800

## Description

La présente invention est relative à un additif minéral pour composition alimentaire destinée à des animaux, comprenant, sous forme biodigestible, au moins un sel d'acide phosphorique et d'un composé capable de former un sel avec lui.

Pour préparer des compositions alimentaires pour animaux, il est connu d'une manière générale d'ajouter un phosphate à l'état sec à une substance de base formant l'aliment, par exemple du maïs, des huiles, du blé, etc. Le préparateur utilise par exemple des sels sous la forme de phosphate de calcium, de sodium et/ou d'ammonium à l'état solide, en poudre ou sous forme de granulés. Ces sels solides sont achetés par le préparateur auprès de leurs fabricants qui les produisent dans des ateliers conçus spécifiquement dans ce but.

Un inconvénient du procédé connu est que la préparation de phosphate par exemple de calcium à l'état sec est un procédé qui non seulement nécessite une grande quantité d'énergie, mais qui également ne permet pas une fabrication en petite quantité. De plus l'usage de phosphate de calcium à l'état sec ne donne pratiquement aucune flexibilité au préparateur de l'aliment, car il ne permet pas de tenir compte de la composition de la substance de base.

Les additifs alimentaires à base de phosphates à l'état solide posent aussi des problèmes de biodisponibilité pour l'organisme de l'animal qui excrète alors de grandes quantités de phosphore indigeste, ce qui pose des problèmes environnementaux.

Comme exemples de documents prévoyant l'utilisation de phosphates solides et secs comme additif minéral alimentaire on peut citer les demandes de brevets WO2005/066071 et FR-A-7517611.

On connaît par ailleurs un procédé de préparation de composés de phosphore solubles dans l'eau et disponibles pour être utilisés comme supplément alimentaire, ces composés étant essentiellement constitués d'acide phosphorique (voir US-A-4154800).

La présente invention a pour but de mettre au point un additif minéral pour composition alimentaire pour animaux, qui donne une grande flexibilité au préparateur et qui puisse être préparé en petites quantités de manière simple, tout en étant extrêmement bien absorbables par les animaux.

Pour résoudre ce problème, on a prévu, suivant l'invention, une utilisation d'une solution aqueuse d'au moins un sel d'acide phosphorique et d'un composé capable de former un sel avec lui, choisi parmi le groupe constitué du sodium, du calcium et de l'ammoniac, comme additif minéral pour composition alimentaire destinée à des animaux, sous forme biodigestible, ladite solution aqueuse se présentant sous la forme d'ions phosphate et d'ions du composé susdit, et ayant une teneur en P₂O₅ supérieure à 18% en poids. Dans un telle solution, l'additif minéral est sous la forme d'une solution aqueuse dans laquelle ledit au moins un sel est à l'état dissous et se présente sous la forme d'ions phosphate et d'ions du composé susdit. Dans un tel additif, le phosphore se présente à l'état totalement soluble dans l'eau, c'est-à-dire que sa biodisponibilité (92% au lieu de 72% pour un phosphate à l'état sec) pour l'organisme de l'animal va permettre de réduire les consommations spécifiques en produit phosphaté et les excrétions de phosphore indigeste. Il n'est pas nécessaire de procéder à des étapes de séchage et/ou d'extrusion du phosphate. De plus, la forme liquide du produit facilite le dosage dans l'aliment pour animaux.

Avantageusement, les ions phosphate sont choisis parmi le groupe constitué des ions orthophosphate, monohydrogénophosphate et dihydrogénophosphate et de leurs mélanges, de préférence les ions dihydrogénophosphate. La solution aqueuse formant l'additif peut aussi contenir en supplément de l'acide phosphorique.

L'additif minéral suivant l'invention présente un pH ajustable en fonction d'un rapport composé capable de former un sel avec l'acide phosphore/P établi dans la solution aqueuse, notamment le rapport Ca/P ou Na/P.

Suivant une forme perfectionnée de réalisation de l'invention, l'additif consiste en une solution aqueuse de dihydrogénophosphate de calcium présentant une teneur en P₂O₅ supérieure à 18% en poids, de préférence égale ou supérieure à 20% en poids.

L'invention concerne aussi une composition alimentaire pour animaux contenant au moins une substance alimentaire de base et au moins un additif minéral suivant l'invention, ainsi qu'éventuellement d'autres additifs alimentaires courants, connus de l'homme de métier.

La présente invention est également relative à un procédé de préparation d'une composition alimentaire pour animaux comprenant les étapes suivantes :
A) préparation d'une solution aqueuse formant ledit additif minéral selon la présente invention,
B) mélange dudit additif minéral à une substance de base.

Ledit additif minéral, en particulier une solution aqueuse limpide de dihydrogénophosphate de calcium (MCP), peut être préparé suivant plusieurs modes de réalisation. . Suivant un mode de réalisation de l'invention, la préparation dudit additif minéral comprend une solubilisation dans l'eau d'un triple superphosphate (TSP) avec formation d'une pulpe constituée d'une phase aqueuse contenant du phosphate de calcium en solution dans l'eau sous forme d'ions calcium et d'ions phosphate et d'une phase solide contenant des impuretés, et une séparation entre ladite phase solide et la phase aqueuse formant ledit additif minéral. Une solubilisation dans l'eau de TSP a déjà été décrite par exemple dans la demande de brevet internationale WO 2005/066071.

Suivant un autre mode de réalisation de l'invention, la préparation dudit additif minéral comprend une attaque d'un minerai de phosphate par un acide phosphorique avec formation d'une pulpe constituée d'une phase aqueuse contenant du phosphate de calcium en solution dans l'eau sous forme d'ions calcium et d'ions phosphate et d'une phase solide contenant des impuretés, et une séparation entre ladite phase solide et la phase aqueuse formant ledit additif minéral.

Suivant encore un autre mode de réalisation de l'invention, la préparation dudit additif minéral comprend un mélange d'acide phosphorique avec une suspension aqueuse d'hydroxyde de calcium, une formation d'un précipité de monohydrogénophosphate de calcium (DCP) et une séparation entre le précipité et une solution limpide de dihydrogénophosphate de calcium (MCP) formant ledit additif minéral.

Suivant un mode avantageux de réalisation de l'invention, la préparation dudit additif minéral comprend un mélange d'acide phosphorique avec une suspension aqueuse d'hydroxyde de calcium, une formation d'un premier précipité de monohydrogénophosphate de calcium (DCP), une séparation entre le premier précipité et une solution aqueuse de dihydrogénophosphate de calcium (MCP), une addition à cette solution aqueuse d'une base forte et une séparation entre un deuxième précipité et une solution limpide de dihydrogénophosphate de calcium (MCP) formant ledit additif minéral.

Suivant un mode préféré de réalisation de l'invention, la préparation dudit additif minéral comprend un mélange d'une liqueur à base d'acide phosphorique et de dihydrogénophosphate de calcium (MCP) avec une suspension aqueuse d'hydroxyde de calcium et une base forte, une formation d'un premier précipité de monohydrogénophosphate de calcium (DCP), une première séparation entre ce premier précipité et une phase liquide, un mélange de ce premier précipité avec de l'acide phosphorique frais, une formation d'un deuxième précipité et une deuxième séparation entre le deuxième précipité et une phase liquide constituée de ladite liqueur, ladite phase liquide issue de la première séparation étant une solution limpide de dihydrogénophosphate de calcium (MCP) formant ledit additif minéral.

La base forte susdite est de préférence de l'hydroxyde de métal alcalin, en particulier de l'hydroxyde de sodium, avantageusement à une concentration de l'ordre de 45-55% en poids. L'acide phosphorique utilisé est avantageusement un acide phosphorique préalablement défluoré (DPA), présentant en particulier une teneur en P₂O₅ de 35-55% en poids, de préférence de 50-55% en poids.

L'utilisation suivant l'invention comprend avantageusement une détermination du pH de ladite substance de base, une prévision d'un pH prédéterminé à atteindre pour la composition alimentaire, une préparation dudit additif minéral suivant l'invention de façon qu'il présente un pH tel que, lorsque l'additif minéral est ajouté à la substance de base, ledit pH prédéterminé est obtenu pour la composition alimentaire.

La forme liquide de l'additif minéral permet un dosage précis de celui-ci dans la substance de base de l'aliment. De plus, il est aisé de contrôler le pH et les rapports P/Ca⁺⁺, P/Na⁺, P/NH₃⁺ dans l'additif. Cela permet donc d'atteindre très facilement le pH prédéterminé susdit qui convient aux conditions alimentaires requises par le préparateur.

D'autres particularités de l'invention sont indiquées dans les revendications annexées.

D'autres détails de l'invention ressortiront de la description donnée ci-après et des dessins annexés.
Les figures 1 et 2 représentent deux variantes de réalisation de dispositifs pour la préparation d'un additif minéral suivant l'invention.
La figure 3 illustre les variations du pH en fonction du rapport Na/P dans une solution aqueuse de NaOH/H₃PO₄.

Le procédé suivant l'invention pour la préparation d'un aliment pour animaux comprend la préparation de l'additif suivant l'invention contenant du phosphate et au moins un des composants cationiques choisis parmi des sels ou bases notamment de calcium, sodium ou ammonium. Le procédé comprend également la mise en oeuvre d'une substance de base, par exemple formée par du mais, des huiles, du blé, etc. Suivant le procédé de l'invention on détermine le pH de la substance de base et l'on prédétermine le pH dudit aliment. On prépare le phosphate sous forme d'une solution dont le pH est tel que, lorsque le phosphate est ajouté à la substance de base, ledit pH prédéterminé est obtenu pour l'aliment.

L'additif est donc formé par une solution de phosphate. Cette solution a un pH situé entre 0,5 et 7,5. Le fluor et les métaux lourds dans l'additif ne dépassent pas les limites des standards du marché. Le préparateur fixera le pH de la solution selon ses besoins et les considérations de sa formule de compositions de l'aliment.

L'avantage de cette voie est que le phosphore est un complètement soluble dans l'eau, ce qui offre une meilleure assimilation par l'organisme de l'animal. Les solutions claires peuvent avoir une concentration de plus de 18%, de préférence de plus de 20% de P₂O₅. Cette solution peut contenir en plus des ions phosphate des cations de Na⁺, NH₄⁺, Ca⁺⁺.

Le phosphore a de préférence les formes suivantes :
H₃PO₄, H₂PO₄⁻, HPO₄⁻⁻, PO₄⁻⁻, et en particulier H₂PO₄⁻.

Le dispositif pour la synthèse de cet additif peut se réduire, dans sa forme la plus simple, à un mélangeur alimenté par des flux dosés par des systèmes de dosage appropriés mis en ligne avec un système de séparation solide-liquide.

Le pH et la température, ainsi que la concentration du mélange mesurée éventuellement par un densimètre, serviront comme paramètres de contrôle pour les indicateurs qui fixent les rapports du mélange des différents flux du procédé.

Le procédé suivant l'invention va à présent être décrit de manière plus détaillée à l'aide d'exemples de réalisation non limitatifs, repris ci-dessous.

### Exemple 1

100g de carbonate de sodium sont alimentés à un réacteur agité dans lequel on introduit par ailleurs un liquide d'attaque contenant des ions phosphate, par exemple du H₃PO₄ défluoré (appelé aussi DPA). Le carbonate de sodium présente avantageusement une teneur en Na₂CO₃ de 98% en poids, tandis que l'acide phosphorique a une teneur en P₂O₅ de l'ordre de 30-40% en poids. Les conditions de digestion sont établies de manière à ajuster le pH selon le souhait du consommateur pour répondre à ses besoins de formulation de l'aliment.

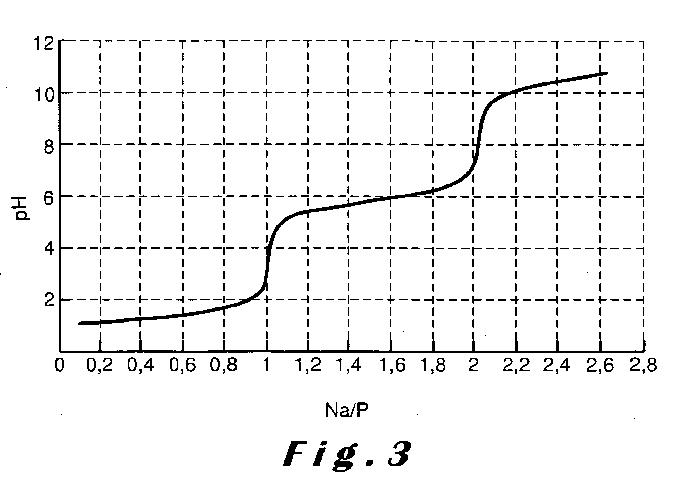

Le mélange obtenu aura un pH qui pourra varier en fonction de rapport Na/P pratiqué, comme illustré à la figure 3. La courbe montre révolution du pH du mélange en fonction de ce rapport.

### Exemple 2

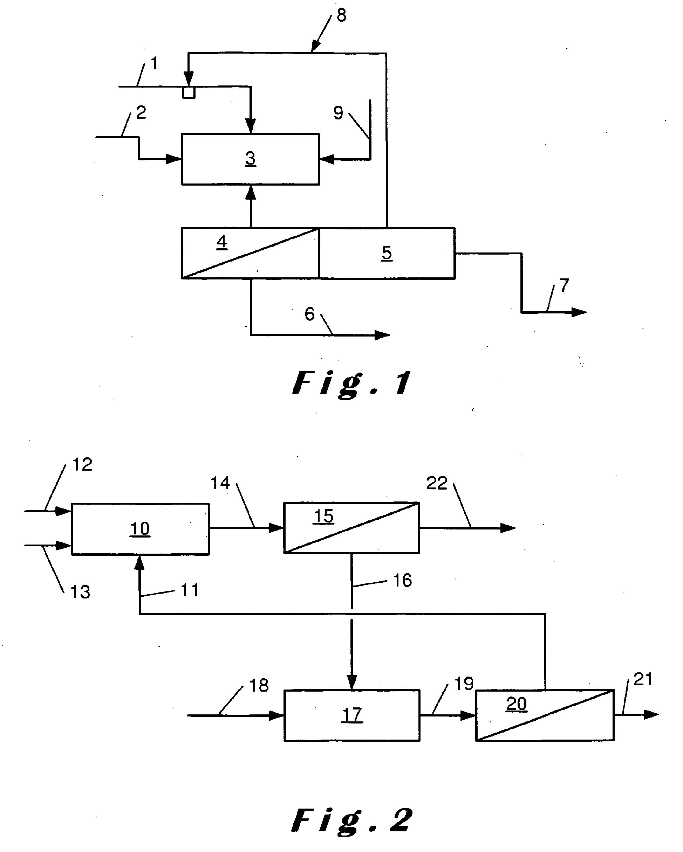

Comme illustré à la figure 1 , on traite dans un mélangeur 3, 100 g d'un minerai de phosphate, de préférence broyé, avec une solution d'acide phosphorique 1 qualité engrais, qui présente une concentration de l'ordre de 35-45% en poids de P₂O₅.

La digestion s'effectue avantageusement aux température et pression ambiantes. On peut évidemment prévoir une température plus élevée, allant jusqu'à 80°C par exemple. Le CO₂ présent dans le minerai sous forme du carbonate est dégagé lors de la réaction par une sortie 9. La pulpe formée est conduite vers un dispositif de séparation solide-liquide 4 de manière à éliminer les insolubles où se trouve la grande partie des impuretés (fluor/silice). La phase solide est soumise à un lavage à l'eau dans un dispositif de lavage 5. Pendant la filtration le pH est en particulier de 2-3. A ce pH élevé, la plupart des métaux lourds formant les impuretés précipitent à l'exception du MCP. L'eau de lavage 8 du gâteau de filtration est recyclée éventuellement pour diluer l'acide phosphorique 1 utilisé pour traiter le minerai. La solution limpide de MCP 6 (380 g) est utilisée directement comme additif minéral suivant l'invention. Le résidu lavé des insolubles est évacué par le conduit 7.

### Exemple 3

Dans un réacteur on introduit 100g de DPA à une concentration de 54% de P₂O₅, qui a été dilué par 28 g d'eau, et 150 g de lait de chaux, cette suspension aqueuse contenant une teneur en Ca(OH)₂ de 20% en poids, après 30 minutes d'agitation intense de ce mélange, la suspension formée contient 27 g de matières solides formées pour la plus grande part de DCP. Le pH de la suspension est d'environ 1,7.

Après une étape de séparation solide/liquide, effectuée sur cette suspension, par exemple par filtration ou centrifugation ou toute autre opération de séparation appropriée, on obtient une solution limpide de MCP présentant une teneur en P₂O₅ de 18% en poids et une teneur en fluor de seulement 316 ppm. On récupère environ 80% en poids du P₂O₅ initial dans la solution limpide de MCP, qui va servir d'additif minéral suivant l'invention.

### Exemple 4

Dans un réacteur on introduit 400 g de DPA à une concentration de 54% en poids de P₂O₅, sous une forme non diluée, et 600 g de lait de chaux présentant une teneur de 20% en poids de Ca(OH)₂. Après 30 minutes d'agitation, la suspension contient 125 g de matières solides formées pour la plus grande part de DCP. Le pH de la suspension est d'environ 1,7.

Après une étape de séparation solide/liquide effectuée sur la suspension, on obtient une solution aqueuse contenant 80% en poids du P₂O₅ initial.

A la solution aqueuse précitée on ajoute, dans une deuxième étape du procédé, 30 g d'hydroxyde de sodium en solution aqueuse à une concentration de 50% en poids de NaOH. Le mélange est agité pendant encore 30 minutes jusqu'à l'achèvement de la réaction. Le pH de la suspension obtenue atteint environ 2,4. La teneur en matières solides est à présent de 25 g, ce qui fait au total 150 g de matières solides en théorie.

On effectue alors une seconde étape de séparation solide/liquide qui est effectuée sur la suspension de la deuxième étape du procédé. On obtient 25 g de résidus solides, exprimés en matière sèche. On obtient une solution limpide de MCP avec une teneur en P₂O₅ de 20,3% en poids et une teneur en fluor d'environ 300 ppm.

### Exemple 5

Ainsi qu'il est illustré sur la figure 2, dans une première étape, on introduit en 11, dans un premier réacteur 10, une liqueur à base de DPA et de MCP qui provient d'une seconde étape du procédé mis en oeuvre. Dans ce même réacteur, on introduit en 1230g de NaOH à 50% en poids et en 13 600 g de lait de chaux à 20% en poids. Après une agitation intense on obtient une suspension qui est évacuée par le conduit 14 dans un dispositif de séparation solide/liquide 15. Le précipité solide (125 g), formé pour la plus grande part de DCP, est renvoyé par le conduit 16 dans un second réacteur 17 de la seconde étape susdite.

Dans ce second réacteur, on introduit en 18 400 g de DPA frais présentant une teneur en P₂O₅ de 54% en poids. Après un mélange intense, on obtient une suspension que l'on transfère par le conduit 19 à un dispositif de séparation solide/liquide 20. Le précipité est formé de 25 g de matière sèche que l'on élimine en 21, tandis que la liqueur débarrassée de cette matière solide est, comme indiqué ci-dessus, recyclée au premier réacteur 10, par le conduit 11.

La phase liquide issue du séparateur 15 est évacuée de celui-ci par le conduit 22. Elle est constituée d'une solution aqueuse limpide de MCP (1005 g) qui présente une teneur en P₂O₅ de 20,3% en poids.

Dans ce procédé en contre-courant et en 2 étapes, on récupère globalement dans la solution de MCP 94% en poids du P₂O₅ introduit ou même davantage.

Pour être rentable économiquement les procédés classiques nécessitent une capacité minimale. Compte tenu de leur complexité et de la multitude des opérations physico-chimiques qui les constituent, la taille des dispositifs mis en oeuvre est importante. Il s'agit d'unités immobiles produisant pour plus d'un client, voire même pour le marché extérieur.

Ces unités sont fixées sur un terrain avec une structure et organisation spécifiques.

Par contre, avec la technologie suivant l'invention et le nouveau concept d'approvisionnement en phosphore on peut envisager l'installation chez le préparateur d'un dispositif de production de solutions de sels de phosphate. Vu la grande capacité de production de ce système, des petites unités fixes chez le client ou mobiles sur une large zone géographique sont tout à fait envisageables. Une unité mobile de ce genre peut générer plus de 100 kt/an de MCP produit, c'est-à-dire > 12 kt/h.

Il doit être entendu que la présente invention n'est en aucune façon limitée par les exemples donnés ci-dessus et que bien des modifications peuvent y être apportées dans le cadre des revendications annexées.

## Revendications

1. Utilisation d'une solution aqueuse d'au moins un sel d'acide phosphorique à l'état dissous et d'un composé capable de former un sel avec lui, choisi parmi le groupe constitué du sodium, du calcium et de l'ammoniac, comme additive minéral pour composition alimentaire destinée à des animaux, sous forme biodigestible, ladite solution aqueuse se présentant sous la forme d'ions phosphate et d'ions du composé susdit, et ayant une teneur en P₂O₅ supérieure à 18% en poids.

2. Utilisation suivant la revendication 1, **caractérisée en ce que** ledit au moins un sel à l'état dissous se présente sous la forme d'ions du compose susdit et d'ions phosphate choisis parmi le groupe constitué des ions orthophosphate, monohydrogénophosphate et dihydrogénophosphate et de leurs mélanges.

3. Utilisation suivant la revendication 1 ou 2, **caractérisée en ce que** la solution aqueuse consiste en une solution aqueuse de dihydrogénophosphate de calcium.

4. Utilisation suivant l'une des revendications 1 à 3, **caractérisée en ce qu'**elle comprend une détermination du pH d'une substance de base, une prévision d'un pH prédéterminé à atteindre pour la composition alimentaire, une préparation de ladite solution aqueuse formant ledit additif minéral de façon qu'elle présente un pH tel que, lorsque la solution aqueuse est ajoutée à la substance de base, ledit pH prédéterminé est obtenu pour la composition alimentaire.

5. Composition alimentaire pour animaux, obtenue par mélange d'au moins une substance alimentaire de base et d'au moins un additif minéral tel que défini à la revendication 1, ainsi qu'éventuellement d'autres additives alimentaires.

6. Procédé de préparation d'une composition alimentaire pour animaux selon la revendication 5, comprenant les étapes suivantes :
A) préparation d'une solution aqueuse formant ledit additif minéral tel que défini à la revendication 1, de la facon suivante :
a) une solubilisation dans l'eau d'un triple superphosphate (TSP) avec formation d'une pulpe constituée d'une phase aqueuse contenant du phosphate de calcium en solution dans l'eau sous forme d'ions calcium et d'ions phosphate et d'une phase solide contenant des impuretés, et une séparation entre ladite phase solide et la phase aqueuse formant ledit additif minéral, ou
b) une attaque d'un minerai de phosphate par un acide phosphorique avec formation d'une pulpe constituée d'une phase aqueuse contenant du phosphate de calcium en solution dans l'eau sous forme d'ions calcium et d'ions phosphate et d'une phase solide contenant des impuretés, et une séparation entre ladite phase solide et la phase aqueuse formant ledit additif minéral, , ou
c) un mélange d'acide phosphorique avec une suspension aqueuse d'hydroxyde de calcium, une formation d'un précipité de monohydrogénophosphate de calcium (DCP) et une séparation entre le précipité et une solution limpide de dihydrogénophosphate de calcium (MCP) formant ledit additif minéral, ou
d) un mélange d'acide phosphorique avec une suspension aqueuse d'hydroxyde de calcium, une formation d'un premier précipité de monohydrogénophosphate de calcium (DCP) et une séparation entre le premier précipité et une solution aqueuse de dihydrogénophosphate de calcium (MCP), une addition à cette solution aqueuse d'une base forte et une séparation entre un deuxième précipité et une solution limpide de dihydrogénophosphate de calcium formant ledit additif minéral, ou
e) un mélange d'une liqueur à base d'acide phosphorique et de dihydrogénophosphate (MCP) avec une suspension aqueuse d'hydroxyde de calcium et une base forte, une formation d'un premier précipité de monohydrogénophosphate de calcium (DCP), une première séparation entre ce premier précipité et une phase liquide, un mélange de ce premier précipité avec de l'acide phosphorique frais, une formation d'un deuxième précipité et une phase liquide constituée de ladite liqueur, ladite phase liquide issue de la première séparation étant une solution limpide de dihydrogénophosphate de calcium (MCP) formant ledit additif minéral ;
B) mélange de ladite solution aqueuse à une substance alimentaire de base.

7. Procédé suivant la revendication 6, **caractérisé en ce que** l'acide phosphorique est un acide phosphorique défluoré.

8. Procédé suivant l'une des revendications 6 et 7, **caractérisé en ce qu'**il comprend une récupération de la teneur en P₂O₅ dans la solution limpide de dihydrogénophosphate de calcium formant l'additif minéral qui est supérieure à 80%, de préférence supérieure à 90%, avantageusement égale ou supérieure à 94%.

## Patentansprüche

1. Verwendung einer wässrigen Lösung von mindestens einem Phosphorsäuresalz im gelösten Zustand und einer Verbindung, die fähig ist, mit dieser ein Salz zu bilden, ausgewählt aus der Gruppe bestehend aus Natrium, Calcium und Ammoniak, als Mineralzusatz für eine Nahrungsmittelzusammensetzung für Tiere in biologisch verdaubarer Form, wobei die wässrige Lösung in Form von Phosphationen und von Ionen der oben genannten Verbindung vorliegt und einen P₂O₅-Gehalt von über 18 Gew.-% aufweist.

2. Verwendung nach Anspruch 1, **dadurch gekennzeichnet, dass** das mindestens eine Salz im gelösten Zustand in Form von Ionen der genannten Verbindung und von Phosphationen, ausgewählt aus der Gruppe bestehend aus Orthophosphationen, Monohydrogenphosphationen und Dihydrogenphosphationen und ihren Mischungen, vorliegt.

3. Verwendung nach Anspruch 1 oder 2, **dadurch gekennzeichnet, dass** die wässrige Lösung aus einer wässrigen Lösung von Calciumdihydrogenphosphat besteht.

4. Verwendung nach einem der Ansprüche 1 bis 3, **dadurch gekennzeichnet, dass** sie eine Bestimmung des pH-Werts einer Grundsubstanz, die Bereitstellung eines vorbestimmten, für die Nahrungszusammensetzung zu erzielenden pH-Werts, die Herstellung der wässrigen Lösung, die den Mineralzusatz bildet, sodass sie solch einen pH-Wert aufweist, dass beim Hinzufügen der wässrigen Lösung zu der Grundsubstanz der vorbestimmte pH-Wert für die Nahrungszusammensetzung erzielt wird, umfasst.

5. Nahrungszusammensetzung für Tiere, erhalten durch Vermischen von mindestens einer Nahrungsgrundsubstanz und mindestens einem Mineralzusatz wie in Anspruch 1 definiert, sowie gegebenenfalls von anderen Nahrungszusatzstoffen.

6. Verfahren zur Herstellung einer Nahrungszusammensetzung für Tiere nach Anspruch 5, umfassend die folgenden Schritte:
A) Herstellung einer wässrigen Lösung, die den Mineralzusatz bildet, wie in Anspruch 1 definiert, und zwar folgendermaßen:
a) Solubilisieren eines Tripelsuperphosphats (TSP) in Wasser unter Bildung eines Breis, der aus einer wässrigen Phase, die Calciumphosphat in Lösung in Wasser in Form von Calciumionen und Phosphationen enthält, und einer festen Phase, die Verunreinigungen enthält, besteht, und eine Trennung zwischen der festen Phase und der wässrigen Phase den Mineralzusatz bildet, oder
b) Angriff eines Phosphatminerals durch eine Phosphorsäure unter Bildung eines Breis, der aus einer wässrigen Phase, die Calciumphosphat in Lösung in Wasser in Form von Calciumionen und Phosphationen enthält, und einer festen Phase, die Verunreinigungen enthält, besteht, und eine Trennung zwischen der festen Phase und der wässrigen Phase den Mineralzusatz bildet, oder
c) Mischen von Phosphorsäure mit einer wässrigen Suspension von Calciumhydroxid, Bildung eines Calciummonohydrogenphosphat (DCP)- Niederschlags und Trennung zwischen dem Niederschlag und einer klaren Calciumdihydrogenphosphat (MCP)- Lösung, die den Mineralzusatz bildet, oder
d) Mischen von Phosphorsäure mit einer wässrigen Calciumhydroxidsuspension, Bildung eines ersten Calciummonohydrogenphosphat (DCP)- Niederschlags und Trennung zwischen dem ersten Niederschlag und einer wässrigen Calciumdihydrogenphosphat (MCP)- Lösung, Versetzen dieser wässrigen Lösung mit einer starken Base und Trennung zwischen einem zweiten Niederschlag und einer klaren Calciumdihydrogenphosphat-Lösung, die den Mineralzusatz bildet, oder
e) Mischen einer Lauge auf Basis von Phosphorsäure und Dihydrogenphosphat (MCP) mit einer wässrigen Calciumhydroxydsuspension und einer starken Base, Bildung eines ersten Calciummonohydrogenphosphat (DCP)- Niederschlags, erste Trennung zwischen dem ersten Niederschlag und einer flüssigen Phase, Mischen des ersten Niederschlags mit frischer Phosphorsäure, Bildung eines zweiten Niederschlags und einer flüssigen Phase, die aus der Lauge besteht, wobei die flüssige Phase, die sich aus der ersten Trennung ergibt, eine klare Lösung aus Calciumdihydrogenphosphat (MCP) ist, die den Mineralzusatz bildet;
B) Mischen der wässrigen Lösung mit einem Nahrungsmittelgrundstoff.

7. Verfahren nach Anspruch 6, **dadurch gekennzeichnet, dass** es sich bei der Phosphorsäure um eine defluorierte Phosphorsäure handelt.

8. Verfahren nach einem der Ansprüche 6 und 7, **dadurch gekennzeichnet, dass** es eine Wiedergewinnung des P₂O₅-Gehalts in der klaren Calciumdihydrogenphosphatlösung, die den Mineralzusatz bildet, welcher mehr als 80%, vorzugsweise mehr als 90%, vorteilhaft 94% oder mehr beträgt, umfasst.

## Claims

1. Use of an aqueous solution of at least one phosphoric acid salt in a dissolved state and of a compound capable of forming a salt therewith, selected among a group composed of sodium, calcium and ammonia, as a mineral additive for feed composition for animals, in a biodigestible form, said aqueous solution being in the form of phosphate ions and of above-mentioned compound ions, and with a P₂O₅ content higher than 18 % by weight.

2. Use according to claim 1, **characterized in that** said at least one salt in a dissolved state is in the form of above-mentioned compound ions and phosphate ions selected among the group composed of orthophosphate, monohydrogen phosphate and dihydrogen phosphate ions and mixtures thereof.

3. Use according to claim 1 or 2, **characterized in that** the aqueous solution is composed of an aqueous solution of calcium dihydrogen phosphate.

4. Use according to any one of the claims 1 to 3, **characterized in that** it includes a determination of the ph value of a basic substance, a prediction of a predetermined ph value to be reached for the feed composition, a preparation of said aqueous solution forming said mineral additive, so as to present such a ph value that, when the aqueous solution is added to the basic substance, said predetermined ph value is obtained for the feed composition.

5. Feed composition for animals obtained by mixing at least a basic feed substance and at least a mineral additive such as defined in claim 1 and also possibly other feed additives.

6. Method for preparing a feed composition for animals according to claim 5, comprising the following steps:
A) preparing an aqueous solution forming said mineral additive such as defined in claim 1, as follows :
a) a solubilizing in water of a triple superphosphate (TSP) with formation of a pulp composed of an aqueous solution containing calcium phosphate dissolved in water, being in the form of calcium ions and phosphate ions, and composed of a solid phase containing impurities, and a separation between said solid phase and the aqueous phase forming said mineral additive, or
b) a phosphate ore etching by a phosphoric acid with formation of a pulp composed of an aqueous solution containing calcium phosphate dissolved in water, being in the form of calcium ions and phosphate ions, and composed of a solid phase containing impurities, and a separation between said solid phase and the aqueous phase forming said mineral additive, or
c) a mixing of phosphoric acid with an aqueous suspension of calcium hydroxide, a formation of a calcium monohydrogen phosphate (DCP) precipitate and a separation between the precipitate and a clear solution of calcium dihydrogen phosphate (MCP) forming said mineral additive, or
d) a mixing of phosphoric acid with an aqueous suspension of calcium hydroxide, a first precipitate formation of calcium monohydrogen phosphate (DCP) and a separation between the first precipitate and an aqueous solution of calcium dihydrogen phosphate (MCP), an addition of a strong base to this aqueous solution and a separation between a second precipitate and a clear solution of calcium dihydrogen phosphate forming said mineral additive, or
e) a mixing of phosphoric acid and calcium dihydrogen phosphate (MCP) based liquor with an aqueous suspension of calcium hydroxide and a strong base added thereto, a first precipitate formation of calcium monohydrogen phosphate (DCP), a first separation between this first precipitate and a liquid phase, a mixing of this first precipitate with fresh phosphoric acid, a second precipitate formation and a liquid phase composed of said liquor, said liquid phase resulting from the first separation being a clear solution of calcium dihydrogen phosphate (MCP) forming said mineral additive ;
B) mixing of said aqueous solution with a basic feed substance.

7. Method according to claim 6, **characterized in that** the phosphoric acid is a defluorinated phosphoric acid.

8. Method according to claim 6 or 7, **characterized in that** it includes a P₂O₅ content recovery in the clear solution of calcium dihydrogen phosphate forming the mineral additive, said recovery being greater than 80 %, preferably greater than 90 %, advantageously equal to or greater than 94 %.
